# EUROPÄISCHE PATENTSCHRIFT

(11) **EP 1 303 122 B1**
(45) Veröffentlichungstag und Bekanntmachung des Hinweises auf die Patenterteilung: **09.05.2018**
(21) Anmeldenummer: 02102419.5
(22) Anmeldetag: 07.10.2002
(51) Int. Cl.: H04M 3/42, H04M 7/00

(54) **Anzeige von Rufzuständen eines Endgeräts an einem anderen Endgerät in einem TK-Anlagenverbund**
Display of call states of a terminal at another terminal in a network of telecommunication switches
Affichage des états d'appel d'un terminal à un autre terminal dans un réseau de commutateurs de télécommunication

(30) Priorität: 10.10.2001 DE 10149983
(43) Veröffentlichungstag der Anmeldung: 16.04.2003
(73) Patentinhaber: Unify GmbH & Co. KG, 80807 München (DE)
(72) Erfinder: Rist, Claus, 44795 Bochum (DE); Roth, Roland, 45886 Gelsenkirchen (DE); Willmann, Michael, 58454 Witten (DE)
(74) Vertreter: Fritzsche, Thomas

(56) Entgegenhaltungen:
- EP-A- 0 982 919
- DE-A- 10 016 244
- "Standard ECMA-269; 4th Edition; Services for Computer Supported Telecommunications Applications (CSTA) Phase III" Juni 2000 (2000-06) , ECMA XP000962292 & "Standard ECMA-269; 5th Edition; Services for Computer Supported Telecommunications Applications (CSTA) Phase III; pages 1- 688" Dezember 2002 (2002-12) , ECMA * Absatz [06.1]; Abbildungen 6-1 * * Absatz [21.1.17] * * Absatz [21.2.2] * * Absatz [17.1.11] * * Absatz [17.2.7] *
- "Standard ECMA-285; 2nd Edition; Protocol for Computer Supported Telecommunications Applications (CSTA) Phase III, pages 1-426" Juni 2000 (2000-06) , ECMA XP002264069 * Absatz [15.1.11] * * Absatz [15.2.7] * * Absatz [19.1.17] * * Absatz [19.2.2] *

## Beschreibung

Die Erfindung betrifft unter anderem ein Verfahren, bei dem ein Endgerät an einer vermittlungstechnischen Einrichtung betrieben wird. Das Endgerät trägt mindestens ein Anzeigeelement, das Betriebszustände eines dem Anzeigeelement zugeordneten Endgerätes anzeigt. Das Anzeigeelement wird mit Hilfe von Signalisierungsnachrichten von der vermittlungstechnischen Einrichtung abhängig von den Betriebszuständen des dem Anzeigeelement zugeordneten Endgerätes angesteuert.

Das Anzeigeelement ist beispielsweise eine Lampe oder eine Leuchtdiode, die auch als LED (Light Emitting Diode) bezeichnet wird. Jedoch kann das Anzeigeelement auch ein bestimmter Bereich auf einem Bildschirm oder einem LCD (Liquid Cristal Display) sein.

Die vermittlungstechnische Einrichtung ist beispielsweise eine Telekommunikationsanlage oder ein sogenannter Communication Server. Ein Communication Server ist eine Vermittlungseinrichtung auf einem Personal Computer, die über ein lokales Datenübertragungsnetz, z.B. über ein LAN, an eine Netzübergangseinheit, ein sogenanntes Gateway, angeschlossen wird, und in dieser Konstellation eine Telekommunikationsanlage bildet. Neben der Sprachübertragungsfunktionalität bietet diese Plattform die Möglichkeit der Multimediakommunikation. Unter einem Personal Computer wird eine Datenverarbeitungsanlage verstanden, die ursprünglich für einen einzigen Benutzer vorgesehen ist.

Das Endgerät ist beispielsweise ein Telefon, das über eine Leitung an die vermittlungstechnische Einrichtung angeschlossen ist. Jedoch können die Funktionen des Endgerätes auch von einem Rechner erbracht werden, z.B. von einem Personalcomputer.

Ein Verfahren mit den eingangs genannten Verfahrensschritten wird beispielsweise beim Betrieb der Telekommunikationsanlage vom Typ HICOM ausgeführt, die von der SIEMENS AG hergestellt wird. Dieses Verfahren wird jedoch auch unter Verwendung eines Communication Servers ausgeführt, d.h. unter Verwendung einer auf einem Personal Computer basierten Telekommunikationsanlage. Es ist möglich, dem Anzeigeelement entweder ein Endgerät zuzuordnen, das an die gleiche vermittlungstechnische Einrichtung angeschlossen ist, wie das das Anzeigeelement tragende Endgerät. Alternativ lässt sich dem Anzeigeelement jedoch auch ein sogenanntes externes Endgerät zuordnen, d.h. ein Endgerät, das nicht an die gleiche vermittlungstechnische Einrichtung angeschlossen ist. Eine Ansteuerung des Anzeigeelementes wird jedoch nur dann durchgeführt, wenn das dem Anzeigeelement zugeordnete Endgerät an die gleiche vermittlungstechnische Einrichtung, d.h. die gleiche Telekommunikationsanlage, angeschlossen ist.

In DE 100 16 244 A1 ist ein Verfahren zur Zustandssignalisierung eines Teilnehmeranschlusses in einem Kommunikationsnetz mit Kommunikationsanlagen beschrieben, bei dem bei einer Zustandsänderung eines zweiten Teilnehmeranschlusses, der einer zweiten Kommunikationsanlage zugeordnet ist, eine Meldung über die Zustandsänderung an einen ersten Teilnehmeranschluss, der einer ersten Kommunikationsanlage zugeordnet ist, gesendet wird. Eine Ausführung, bei der das Verfahren in einem Datenübertragungsnetz durchgeführt wird, ist in DE 100 16 244 A1 nicht beschrieben.

In unmittelbarer Nähe des Anzeigeelementes, beispielsweise neben dem Anzeigeelement, befindet sich eine Funktionstaste, über die das dem Anzeigeelement zugeordnete Endgerät erreichbar ist. Somit lässt sich über die Funktionstaste eine sogenannte Kurzwahl zu externen Endgeräten oder zu Endgeräten ausführen, die an die gleiche vermittlungstechnische Einrichtung angeschlossen sind.

Für Endgeräte, die an die gleiche vermittlungstechnische Anlage angeschlossen sind, gibt es außerdem das Leistungsmerkmal "Heranholen", das auch als Pick up bezeichnet wird. Bei diesem Leistungsmerkmal befinden sich die beiden Endgeräte beispielsweise im gleichen Raum bzw. in unmittelbarer Hörweite bezüglich des von den Endgeräten erzeugten Ruftons. Wird das dem Anzeigeelement zugeordnete Endgerät gerufen, so lässt sich der ankommende Ruf durch das Betätigen der dem Anzeigeelement zugeordneten Funktionstaste an dasjenige Endgerät heranholen, das die Funktionstaste und das Anzeigeelement trägt.

Die Leistungsmerkmale "Zuordnen von Anzeigeelementen und Funktionstasten zu Endgeräten" sowie "Heranholen eines Rufes" werden von vielen Teilnehmern intensiv genutzt und haben damit eine hohe Akzeptanz.

Dennoch ist es Aufgabe der Erfindung, ein verbessertes Verfahren zum Ansteuern eines Anzeigeelementes an einem Endgerät anzugeben. Außerdem sollen eine zugehörige vermittlungstechnische Einrichtung, ein zugehöriger Anlagenverbund und ein zugehöriges Programm angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Beim erfindungsgemäßen Verfahren wird das dem Anzeigeelement zugeordnete Endgerät an einer anderen vermittlungstechnischen Einheit betrieben. An die vermittlungstechnische Einrichtung zum Betreiben des Endgerätes mit dem Anzeigeelement wird mindestens eine Betriebszustandsnachricht gesendet, die den Betriebszustand des dem Anzeigeelement zugeordneten Endgerätes signalisiert. Die vermittlungstechnische Einrichtung zum Betreiben des Endgerätes mit dem Anzeigeelement steuert abhängig von der Betriebszustandsnachricht das Anzeigeelement an.

Das Verwenden einer Betriebszustandsnachricht zum Signalisieren des Betriebszustandes eines Endgerätes übergreifend über verschiedene vermittlungstechnische Einrichtungen ist eine einfache Möglichkeit, um eine bisher hingenommene Beschränkung zu beseitigen und damit den Bedienkomfort erheblich zu verbessern.

Bei einer Weiterbildung des erfindungsgemäßen Verfahrens ist in enger räumlicher Beziehung zu dem Anzeigeelement ein Funktionselement angeordnet, bei dessen Betätigung das dem Anzeigeelement zugeordnete Endgerät erreichbar ist. Das Funktionselement ist beispielsweise eine Taste oder ein auf einem Bildschirm dargestelltes Bedienfeld. Bei der Weiterbildung wird am Anzeigeelement ein Betriebszustand angezeigt, in welchem das dem Anzeigeelement zugeordnete Endgerät von einem dritten Endgerät aus gerufen wird. Beispielsweise blinkt das Anzeigeelement, um den Betriebszustand "Gerufen" anzuzeigen. Beim Betätigen der Funktionstaste im Zusammenhang mit der Anzeige dieses Betriebszustandes, d.h. entweder gleichzeitig zur Anzeige oder unmittelbar danach, werden Verfahrensschritte zum Heranholen des Rufes ausgeführt. Heranholen des Rufes bedeutet, dass das rufende Endgerät mit dem Endgerät verbunden wird, das das Anzeigeelement trägt.

Durch die Weiterbildung wird auch der Einsatzbereich des Leistungsmerkmals "Heranholen eines Rufes" erheblich erweitert, weil das Heranholen eines Rufes nun auch übergreifend über verschiedene vermittlungstechnische Einrichtungen möglich ist.

Bei einer nächsten Weiterbildung enthalten die Verfahrensschritte zum Heranholen des Rufes eine Rufumleitung des ankommenden Rufes von dem ursprünglich gerufenen Endgerät zu dem Endgerät mit dem Anzeigeelement. Durch diese Weiterbildung lässt sich das Heranholen des Rufes unter Nutzung einer ohnehin oft bereits verfügbaren Funktion ermöglichen. Es sind gegebenenfalls nur vergleichsweise kleine Änderungen an dem Verfahren zur Rufumleitung vorzunehmen, wie es bisher eingesetzt wird.

Bei einer anderen Weiterbildung des erfindungsgemäßen Verfahrens signalisiert die Betriebszustandsnachricht den Betriebszustand des dem Anzeigeelement zugeordneten Endgerätes direkt. Alternativ wird jedoch der Betriebszustand des dem Anzeigeelement zugeordneten Endgerätes indirekt über die Angabe eines Betriebszustandes für das Anzeigeelement signalisiert. Durch diese Maßnahme ist es möglich, die Angabe des Betriebszustandes unmittelbar zum Ansteuern des Anzeigeelementes zu übernehmen.

Bei einer nächsten Weiterbildung des erfindungsgemäßen Verfahrens ist die Betriebszustandsnachricht eine Nachricht gemäß CSTA-Protokoll bzw. gemäß einem auf dem CSTA-Protokoll aufbauenden Protokoll. Das CSTA-Protokoll wurde von der ECMA (European Computer Manufacturer Association) im Standard 269, "Services for Computer Supported Telecommunications Applications (CSTA) Phase III", festgelegt, siehe beispielsweise die dritte Ausgabe vom Dezember 1998 bzw. die vierte Ausgabe vom Juni 2000. Der CSTA-Standard ermöglicht die Einbindung von vermittlungstechnischen Anlagen verschiedener Hersteller in einem Anlagenverbund.

Bei einer alternativen Weiterbildung des erfindungsgemäßen Verfahrens signalisiert die Betriebszustandsnachricht mehrere Betriebszustände für verschiedene Endgeräte. Durch diese Maßnahme lässt sich die Anzahl der zu übertragenden Betriebszustandsnachrichten erheblich verringern.

Bei einer anderen Weiterbildung des erfindungsgemäßen Verfahrens sind mehrere vermittlungstechnische Anlagen über ein Datenpaketübertragungsnetz verbunden. Das Datenpaketübertragungsnetz ist beispielsweise das Internet oder ein gemäß Internetprotokoll arbeitendes Netz. Eingesetzt werden jedoch auch Ethernet-Netzwerke. Während in einem Datenpaketübertragungsnetz in unteren Protokollschichten Datenpakete verbindungslos übertragen werden, werden in einem durchschaltevermittelten Datenübertragungsnetz auch auf unteren Protokollebenen Verbindungen aufgebaut, beispielsweise Zeitkanäle verschaltet. Mit Hilfe von Tunnelprotokollen ist es jedoch möglich, beide Übertragungsarten miteinander zu verbinden.

Bei einer Weiterbildung des erfindungsgemäßen Verfahrens wird eine zentrale Steuereinheit eingesetzt, der einerseits das Betätigen von Funktionstasten an den Endgeräten signalisiert wird und die andererseits die Betriebszustandsnachrichten erzeugt. Aufgrund der zentralen Steuereinheit lassen sich die einzelnen vermittlungstechnischen Anlagen einfach aufbauen, beispielsweise mit vergleichsweise geringem Speicherbedarf und mit vergleichsweise geringer Prozessorleistung.

Bei einer Weiterbildung erzeugt die zentrale Steuereinheit die Betriebszustandsnachrichten unter Verwendung eines Rufmodells, beispielsweise unter Verwendung der im CSTA-Standard vorgesehenen Rufmodelle. Das Verwenden eines Rufmodells ist eine einfache Art, um Änderungen von Betriebszuständen zu vermerken und auf solche Änderungen zu reagieren.

Die Erfindung betrifft außerdem eine vermittlungstechnische Einrichtung, insbesondere eine Telekommunikationsanlage oder einen Communication Server, welcher die Funktion einer Telekommunikationsanlage erbringt, wobei die vermittlungstechnische Einrichtung so aufgebaut ist, dass bei ihrem Betrieb das erfindungsgemäße Verfahren oder eine Weiterbildung ausgeführt wird. Weiterhin ist durch die Erfindung ein Anlagenverbund betroffen, der mindestens zwei vermittlungstechnische Einrichtungen enthält, bei deren Betrieb das erfindungsgemäße Verfahren oder eine Weiterbildung ausgeführt wird. Auch wird ein Programm geschützt, das eine Befehlsfolge enthält, bei deren Ausführung durch einen Prozessor das erfindungsgemäße Verfahren oder eine Weiterbildung ausgeführt wird. Für die vermittlungstechnische Einrichtung, für den Anlagenverbund und für das Programm gelten die oben genannten technischen Wirkungen demzufolge ebenfalls.

Im Folgenden werden Ausführungsbeispiele der Erfindung an Hand der beiliegenden Zeichnungen erläutert. Darin zeigen:
- Figur 1: einen Verbund aus Telekommunikationsanlagen,
- Figuren 2A und 2B: bei einem innerhalb des Verbundes ausgeführten Anruf erzeugte Nachrichten,
- Fig. 3: ein Rufmodell eines Anwendungsprogramms zu einem Zeitpunkt, zu dem das Telefon des gerufenen Teilnehmers klingelt,
- Figuren 4A und 4B: bei einer innerhalb des Verbundes ausgeführten Rufübernahme erzeugte Nachrichten,
- Figur 5: ein Rufmodell des Anwendungsprogramms nach der Rufübernahme, und
- Figur 6: ein Informationselement mit mehreren Elementeinträgen.

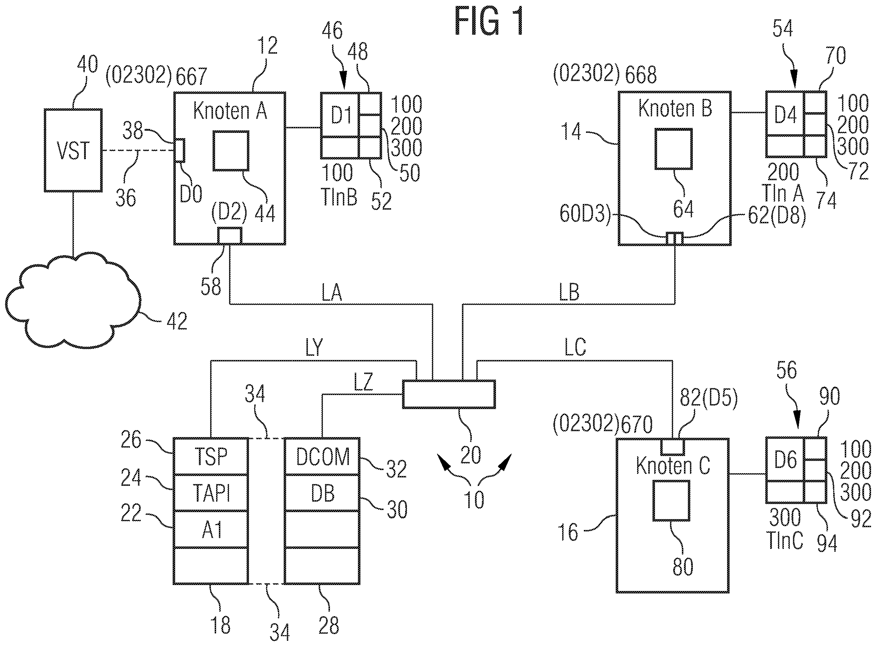

Figur 1 zeigt einen Telekommunikationsanlagenverbund 10, der drei Telekommunikationsanlagen 12, 14 und 16 enthält. Die Telekommunikationsanlagen 12, 14 und 16 befinden sich beispielsweise in Witten, Deutschland, so dass sie mit der Vorwahl 02302 erreichbar sind. Die Telekommunikationsanlagen 12, 14 und 16 haben in dieser Reihenfolge beispielsweise Anlagenrufnummern 667, 668 und 670.

Die Telekommunikationsanlagen 12 bis 16 sind mit einem Rechner 18 über ein lokales Datenübertragungsnetz 20 verbunden, beispielsweise über ein Ethernet oder ein gemäß Internetprotokoll übertragendes Datenübertragungsnetz. Die Telekommunikationsanlagen 12 bis 16 sind beispielsweise Telekommunikationsanlagen des Typs HICOM 150E der Firma SIEMENS AG. Im Vergleich zu bekannten Telekommunikationsanlagen wurden die Telekommunikationsanlagen 12 bis 16 jedoch um Funktionen erweitert, die es ermöglichen, Rufzustände von Telefonen innerhalb des Verbundes 10 ohne Einschränkungen zu signalisieren und dadurch insbesondere die uneingeschränkte Nutzung des Leistungsmerkmals "Rufübernahme" zu ermöglichen.

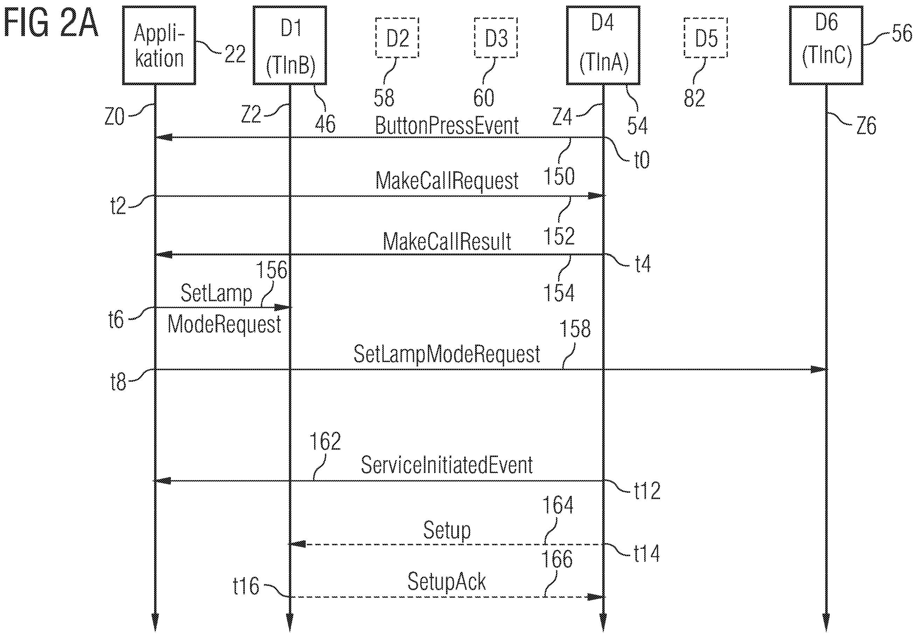

Der Rechner 18 ist beispielsweise ein Personalcomputer, der eine Speichereinheit und einen Prozessor enthält. In der Speichereinheit ist ein Anwendungsprogramm 22 gespeichert, das Funktionen für die uneingeschränkte Signalisierung von Rufzuständen innerhalb des Verbundes 10 erbringt. Die Funktionen des Anwendungsprogramms 22 werden unten an Hand der Erläuterungen zu den Figuren 2A bis 6 deutlich.

Außerdem enthält die Speichereinheit des Rechners 18 eine TAPI-Schnittstelle 24 (Telecommunication Application Programming Interface), die von der Firma MICROSOFT GmbH programmiert wurde. Weiterhin ist in der Speichereinheit des Rechners 18 ein TSP-Programm 26 (TAPI- Service Provider) enthalten, das beispielsweise mit den Telekommunikationsanlagen 12 bis 16 angeboten wird, z.B. bei HICOM-Anlagen unter der Produktbezeichnung 3-rd Party TSP. Das TSP-Programm 26 ermöglicht CSTA-Verbindungen zwischen den Telekommunikationsanlagen 12, 14 und 16 auf der einen Seite und dem Rechner 18 auf der anderen Seite. Das TSP-Programm 26 setzt außerdem CSTA-Befehle in TAPI-Befehle für die TAPI-Schnittstelle 24 um. Andererseits werden aber auch von der TAPI-Schnittstelle 24 kommende TAPI-Befehle in CSTA-Befehle umgesetzt. Weitere Funktionen des TSP-Programms 26 werden bei der Erläuterung der Figuren 2A bis 6 deutlich.

An das Datenübertragungsnetz 20 ist außerdem ein Datenbankrechner 28 angeschlossen, in dessen Speicher sich eine Datenbasis 30 befindet. Die Datenbasis enthält unter anderem Informationen über die Zuordnung von Funktionstasten an den Telefonen des Verbundes 10 zu Kurzwahlzielen, unter denen andere Telefone des Verbundes erreichbar sind. Das Anwendungsprogramm 22 und das TSP-Programm 26 greifen auf die Datenbasis 30 unter Verwendung einer sogenannten DCOM-Schnittstelle 32 zu, die ebenfalls von der Firma MICROSOFT GmbH entwickelt worden ist. Bei einem anderen Ausführungsbeispiel befindet sich die Datenbasis 30 jedoch in der Speichereinheit des Rechners 18, siehe gestrichelte Linie 34, so dass die DCOM-Schnittstelle in diesem Fall nicht erforderlich ist.

Im Datenübertragungsnetz 20 sind die Telekommunikationsanlagen 12, 14 und 16 in dieser Reihenfolge unter Adressen LA, LB bzw. LC erreichbar. Der Rechner 18 bzw. der Datenbankrechner 28 sind unter Adressen LY bzw. LZ erreichbar. Zusätzlich zu den Adressen LA bis LZ gibt es noch sogenannte Portnummern, die einen bestimmte Verbindung kennzeichnen.

Die Telekommunikationsanlage 12 ist über eine Anschlussleitung 36 und eine Anschlusseinheit 38 mit einer Vermittlungsstelle 40 eines öffentlichen Telefonnetzes 42 verbunden, z.B. mit dem durchschaltevermittelten Telefonnetz der Deutschen Telekom AG. Die Vermittlungsstelle 40 ist beispielsweise eine Vermittlungsstelle vom Typ EWSD (elektronisch gesteuertes digitales Wählsystem) der Firma SIEMENS AG.

Die Telekommunikationsanlage 12 enthält außerdem eine Steuereinheit 44, welche die Vermittlungsfunktion erbringt. Außerdem übernimmt die Steuereinheit 44 auch Funktionen im Rahmen der Signalisierung von Rufzuständen, die unten an Hand der Erläuterungen zu den Figuren 2A bis 6 deutlich werden.

An die Telekommunikationsanlage 12 sind eine Vielzahl von Telefonen angeschlossen, von denen in Figur 1 ein Telefon 46 dargestellt ist. Das Telefon 46 ist unter der internen Rufnummer "100" erreichbar. Das Telefon 46 hat eine Vielzahl von Funktionstasten, von denen in Figur 1 drei Funktionstasten 48, 50 und 52 dargestellt sind. Die Funktionstaste 48 ist der internen Rufnummer "100" zugeordnet, d.h. dem Telefon 46 selbst. Die Funktionstaste 50 ist einer verbundinternen Rufnummer "200" zugeordnet, unter der ein an die Telekommunikationsanlage 14 angeschlossenes Telefon 54 erreichbar ist. Der Funktionstaste 52 ist die verbundinterne Rufnummer "300" zugeordnet, unter der ein an die Telekommunikationsanlage 16 angeschlossenes Telefon 56 erreichbar ist.

Die Funktionstasten 48, 50 und 52 enthalten jeweils eine LED (Light Emitting Diode), die zur Signalisierung des Rufzustandes der betreffenden Funktionstaste 48, 50 bzw. 52 dient. Es werden vier Rufzustände signalisiert:
- LED ist erloschen - der Hörer an dem Endgerät, dessen Rufnummer der LED zugeordnet ist, ist aufgelegt,
- LED flackert - das Telefon, das der LED zugeordnet ist, versucht, einen Ruf zu dem Telefon aufzubauen, an dem sich die LED befindet,
- LED blinkt - das der blinkenden LED zugeordnete Telefon wird von einem anderen Telefon gerufen, wobei sich die blinkende LED an einem nicht gerufenen Telefon befindet, und
- LED leuchtet ohne Unterbrechung - der Hörer des der LED zugeordneten Telefons ist abgenommen und der Teilnehmer befindet sich im Gesprächszustand.

Damit das Anwendungsprogramm 22 seine Funktionen erbringen kann, sind den Telefonen 46, 54 und 56 sowie den Schnittstellen an den Telekommunikationsanlagen 12, 14 und 16 Modellkennzeichen gemäß CSTA-Standard zugeordnet ("Services for Computer Supported Telecommunication Applications Phase III). Dieser Standard wurde von der ECMA (Europeen Computer Manufacturer Association) im Dezember 1998 als dritte Ausgabe herausgegeben worden. Weitere Ausgaben des Standards sind bereits erfolgt.

So ist der Anschlusseinheit 38 ein Modellkennzeichen D0 zugeordnet. Das Telefon 46 hat ein Modellkennzeichen D1. Einer Schnittstelle 58 der Telekommunikationsanlage 12 zum Datenübertragungsnetz 20 ist das Modellkennzeichen D2 zugeordnet.

Einer Schnittstelle 60 der Telekommunikationsanlage 14 zum Datenübertragungsnetz 90 ist ein Modellkennzeichen D3 zugeordnet. Einer weiteren Schnittstelle 62 der Telekommunikationsanlage 14 zum Datenübertragungsnetz 20 ist ein Modellkennzeichen D8 zugeordnet.

Die Telekommunikationsanlage 14 enthält ebenfalls eine Steuereinheit 64. Dem an die Telekommunikationsanlage 14 angeschlossenen Telefon 54 ist ein Modellkennzeichen D4 zugeordnet. Außerdem hat das Telefon 54 Funktionstasten 70, 72 und 74, denen in dieser Reihenfolge die Kurzwahlkennzeichen der Telefone 46, 54 und 56 zugeordnet sind, d.h. die Kurzwahlkennzeichen "100", "200" bzw. "300". Das Telefon 54 selbst ist unter der Durchwahl "200" erreichbar.

Die Telekommunikationsanlage 16 enthält eine Steuereinheit 80 und eine Schnittstelle 82 zum Datenübertragungsnetz 20. Der Schnittstelle 82 ist das Modellkennzeichen D5 zugeordnet. Dem Telefon 56 wurde ein Modellkennzeichen D6 zugeordnet.

Am Telefon 56 befinden sich eine Vielzahl von Funktionstasten, von denen in Figur 1 drei Funktionstasten 90, 92 und 94 dargestellt sind, denen in dieser Reihenfolge die Kurzwahlkennzeichen der Telefone 46, 54 bzw. 56 zugeordnet sind, d.h. die Kennzeichen "100", "200" bzw. "300". Das Telefon 56 selbst ist unter der Durchwahl "300" erreichbar.

Gesprächsdaten und Signalisierungsdaten zwischen den Telekommunikationsanlagen 12 bis 16 werden mit Hilfe des standardisierten Protokolls QSIG übertragen, siehe Standard der ECMA (European Computer Manufacturer Association) Standard Nr. 173/174. Die Sprachdaten und die Signalisierungsdaten werden jedoch über das Datenübertragungsnetz 20 "getunnelt", d.h. mit Hilfe von Datenpaketen übertragen.

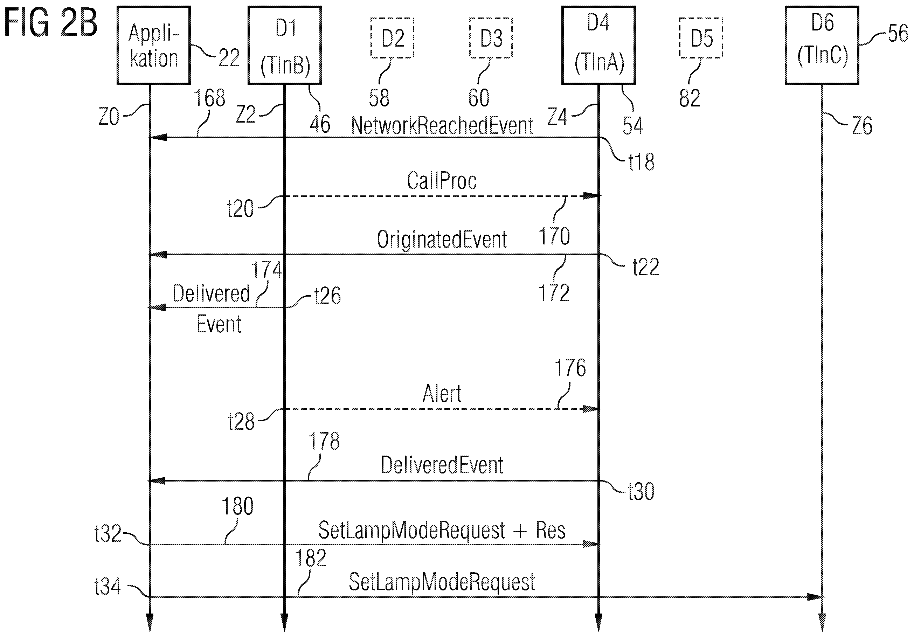

Die Figuren 2A und 2B zeigen Nachrichten, die bei einem Anruf erzeugt werden, der innerhalb des Telekommunikationsanlagenverbundes 10 ausgeführt wird. Generell gilt für die in dieser Beschreibung erläuterten Nachrichten, dass nur Informationselemente erläutert werden, die für das Verständnis der Erfindung bedeutsam sind. Für die Erfindung unwesentliche Informationselemente werden nicht berücksichtigt. Es sei angenommen, dass ein Teilnehmer TlnA vom Telefon 54 aus einen Teilnehmer TlnB anrufen möchte, der üblicherweise das Telefon 46 benutzt.

Der Signalfluss wird mit Hilfe von Zeitstrahlen Z0, Z2, Z4 und Z6 erläutert, die in dieser Reihenfolge Ereignissen zugeordnet sind, die in dem Anwendungsprogramm 22, dem Telefon 46, dem Telefon 54 bzw. dem Telefon 56 zugeordnet sind. Spätere Zeitpunkte liegen auf den Zeitstrahlen Z0 bis Z6 weiter unten als frühere Zeitpunkte. Gleiche Zeitpunkte liegen auf gleicher Höhe.

Zu einem Zeitpunkt t0 nimmt der Teilnehmer TlnA den Hörer des Endgerätes 54 ab und betätigt die Funktionstaste 70, der das Kurzwahlziel "100" zugeordnet ist, um das Endgerät 46 des Teilnehmers TlnB zu rufen. Durch das Betätigen der Funktionstaste 70 wird von der Rufsteuerung 64 in der Telekommunikationsanlage 14 eine CSTA-Nachricht 150 erzeugt, die standardgemäß als ButtonPressEvent-Nachricht bezeichnet wird und die folgenden Parameter enthält:
- device D4,
- button B1, und
- privateData 0,
wobei das Kennzeichen D4 mit dem oben an Hand der Figur 1 erläuterten Kennzeichen übereinstimmt. Ein Kennzeichen B1 bezeichnet die Funktionstaste 70. Die CSTA-Nachricht 150 wird von der Telekommunikationsanlage 14 über das Datenübertragungsnetz 20 zum Anwendungsprogramm 22 übertragen und dort ausgewertet.

Das Anwendungsprogramm 22 erzeugt zu einem Zeitpunkt t2 eine CSTA-Nachricht, die standardgemäß als MakeCallRequest bezeichnet wird und die folgenden Parameter enthält:
- callingDevice D4, und
- calledDirectoryNumber D1,
wobei die Kennzeichen D4 und D1 mit den oben an Hand der Figur 1 erläuterten Kennzeichen übereinstimmen. Die CSTA-Nachricht 152 wird über das Datenübertragungsnetz 20 zur Vermittlungsstelle 14 übertragen und dort durch die Rufsteuerung 64 bearbeitet.

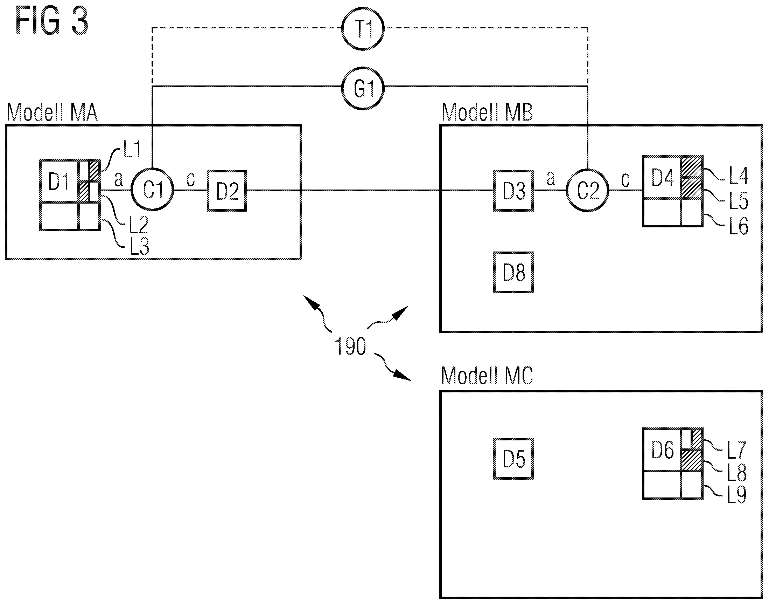

Die Rufsteuerung 64 erzeugt zu einem Zeitpunkt t4 aufgrund der CSTA-Nachricht 152 eine CSTA-Nachricht 154, die standardgemäß auch als MakeCallResult bezeichnet wird und die folgenden Parameter enthält:
- initiatedCalls D4C2,
wobei C2 ein Rufkennzeichen ist, das unten an Hand der Figur 3 noch näher erläutert wird.

Die CSTA-Nachricht 154 wird von der Vermittlungsstelle 14 über das Datenübertragungsnetz 20 zum Anwendungsprogramm 22 übertragen und dort ausgewertet.

Daraufhin erzeugt das Anwendungsprogramm 22 zu einem Zeitpunkt t6 eine CSTA-Nachricht 156, die standardgemäß auch als SetLampModeRequest bezeichnet wird und die folgenden Parameter enthält:
- device D1,
- lamp L2,
- lampMode "flutter",
wobei das Kennzeichen L2 zur Bezeichnung der LED in der Funktionstaste 50 des Telefons 56 ist, d.h. derjenigen Funktionstaste, die dem Telefon 56 selbst zugeordnet ist. Das Kennzeichen "flutter" bezeichnet einen Betriebszustand, in dem die LED der Funktionstaste 50 flattert, um anzuzeigen, dass das Telefon 46 gerufen wird. Die CSTA-Nachricht 156 wird über das Datenübertragungsnetz 20 zur Vermittlungsstelle 12 übertragen, deren Rufsteuerung 44 dann das Flackern der LED in der Funktionstaste 50 veranlasst, beispielsweise mit Hilfe eines sogenannten Stimulusprotokolls.

Zu einem Zeitpunkt t8 erzeugt das Anwendungsprogramm 22 eine CSTA-Nachricht 158 für das Telefon 56. Die CSTA-Nachricht 158 wird auch als SetLampModeRequest bezeichnet und enthält die folgenden Parameter:
- device D6,
- lamp L8,
- lampMode "steady",
wobei L8 ein Kennzeichen für eine LED in der Funktionstaste 92 des Telefons 56 ist. Das Kennzeichen "steady" bezeichnet einen Betriebszustand dieser LED, in welchem die LED ununterbrochen leuchtet. Die CSTA-Nachricht 158 wird ebenfalls über das Datenübertragungsnetz 20 jedoch zur Telekommunikationsanlage 16 übertragen. In der Telekommunikationsanlage 16 wertet die Rufsteuerung 80 die CSTA-Nachricht 158 aus und veranlasst die Ansteuerung der LED gemäß dieser CSTA-Nachricht 158. Ein Teilnehmer TlnC erkennt an Hand der leuchtenden LED in der Funktionstaste 92 am Telefon 56, dass der Teilnehmer TlnA den Hörer seines Endgerätes abgehoben hat.

In Figur 2A sind Bestätigungsnachrichten für die CSTA-Nachrichten 156 und 158 nicht dargestellt. Die Bestätigungsnachrichten werden standardgemäß auch als SetLampModeResult-Nachrichten bezeichnet.

Außerdem sind an Hand der Figur 2A keine Nachrichten erläutert, mit denen die Telekommunikationsanlage 14 LED's ansteuert, welche Telefone 54 betreffen, die direkt an die Telekommunikationsanlage 14 angeschlossen sind. Die Ansteuerung der direkt angeschlossenen Telefone 54 wird nämlich wie auch bisher ausgeführt. So wird eine LED in der Funktionstaste 72 eingeschaltet, um auch dem Teilnehmer TlnA zu signalisieren, dass er den Hörer abgenommen hat.

Infolge der CSTA-Nachricht 152 erzeugt die Steuereinheit 64 zu einem Zeitpunkt t12 außerdem eine CSTA-Nachricht 162, die standardgemäß auch als ServiceInitiatedEvent-Nachricht bezeichnet wird und die folgenden Parameter enthält:
- initiatedConnection D4C2,
- initiatingDevice D4,
- localConnectionInfo "Initiated",
- cause "make Call",
- callLinkageData G1, T1,
wobei G1 ein globales Kennzeichen und T1 und sogenanntes Thread-Kennzeichen bezeichnen. Globale Kennzeichen und Thread-Kennzeichen sind in einem anderen Zusammenhang im CSTA-Standard, Ausgabe 2000, näher erläutert. Die CSTA-Nachricht 162 wird über das Datenübertragungsnetz zum Anwendungsprogramm 22 übertragen. Die Steuereinheit 80 der Telekommunikationsanlage 16 erzeugt aufgrund der CSTA-Nachricht 152 außerdem zu einem Zeitpunkt t14 eine Verbindungsaufbaunachricht 164 gemäß der Signalisierung für eine durchschaltevermittelte Datenübertragung. Diese Signalisierung wird über das Datenübertragungsnetz 20 zur Telekommunikationsanlage 12 gemäß einem Tunnelprotokoll getunnelt. Zur Übertragung von Sprachdaten wird ebenfalls das Tunnelprotokoll eingesetzt.

Die Steuereinheit 44 der Telekommunikationsanlage 12 bearbeitet die Verbindungsaufbaunachricht 164 protokollgemäß und sendet zu einem Zeitpunkt t16 eine Bestätigungsnachricht 166, die auch als SetupAck-Nachricht bezeichnet wird, um die Verbindungsaufbaunachricht 164 zu bestätigen. Die Bestätigungsnachricht 166 wird ebenfalls über das Datenübertragungsnetz 20 zur Steuereinheit 64 getunnelt.

Aufgrund der Bestätigungsnachricht 166 erzeugt die Steuereinheit 64 der Telekommunikationsanlage 14 zu einem Zeitpunkt t18 eine CSTA-Nachricht 168, die standardgemäß auch als NetworkReachedEvent-Nachricht bezeichnet wird und die folgenden Parameter enthält:
- outboundConnection D3C2,
- networkInterfaceUsed D3,
- callingDevice D4,
- calledDevice D3,
- localConnectionInfo "connected",
- cause "normal",
- callLinkageData G1, T1,
wobei die genannten Kennzeichen die bereits erläuterten Bedeutungen haben. Mit Hilfe der CSTA-Nachricht 168 wird das Anwendungsprogramm 22 vom Eintreffen der Bestätigungsnachricht 166 informiert. Die Steuereinheit 44 der Telekommunikationsanlage 12 erzeugt zu einem Zeitpunkt t20 aufgrund der Verbindungsaufbaunachricht 164, mit der sämtliche Wahlziffern übermittelt worden sind, eine Fortsetzungsnachricht 170, die auch als CallProc-Nachricht bezeichnet wird. Die Fortsetzungsnachricht 170 wird über das Datenübertragungsnetz 20 zur Steuereinheit 64 getunnelt.

Beim Bearbeiten der Fortsetzungsnachricht 170 erzeugt die Steuereinheit 64 zu einem Zeitpunkt t22 eine CSTA-Nachricht 172, die standardgemäß auch als OriginatedEvent-Nachricht bezeichnet wird und die folgenden Parameter enthält:
- originatedConnection D4C2,
- callingDevice D4,
- calledDevice D1,
- localConnectionInfo "Connected",
- cause "new Call",
- associatedCalledDevice D3,
- callLinkageData G1, T1
wobei die Kennzeichen wieder die bereits erläuterten Bedeutungen haben. Die CSTA-Nachricht 172 wird über das Datenübertragungsnetz 20 zum Anwendungsprogramm 22 übertragen und dort ausgewertet, um die Rufmodelle zu aktualisieren.

Die Steuereinheit 44 der Telekommunikationsanlage 12 erzeugt zu einem Zeitpunkt t26 aufgrund der Verbindungsaufbaunachricht 164 außerdem eine CSTA-Nachricht 174, die gemäß Standard auch als DeliveredEvent bezeichnet wird und welche die folgenden Parameter enthält:
- connection D4C2,
- alertingDevice D1,
- callingDevice D4,
- calledDevice D1,
- originatingNIDConnection D2C1,
- localConnectionInfo "Alerting",
- cause "new Call",
- associatedCallingDevice D2,
- callLinkageData G1, T1,
- privateData
   partnerLine D3C2,
wobei die Kennzeichen die bereits erläuterten Bedeutungen haben. Das Datenfeld "privateData" ist im CSTA-Standard vorgesehen und ermöglicht es, proprietäre Daten zu übertragen, im Ausführungsbeispiel das Kennzeichen D3C2, welches den anderen Halbruf bezüglich der Telekommunikationsanlage 14 kennzeichnet. Dieser Halbruf kann später mit Hilfe einer unten erläuterten Rufübernahme zu einem anderen Telefon umgeleitet werden.

Die Steuereinheit 44 der Telekommunikationsanlage 12 veranlasst das Erzeugen eines Signaltones am Endgerät 46, um den Teilnehmer TlnB zu rufen. Gleichzeitig wird durch die Steuereinheit 44 zu einem Zeitpunkt t28 eine Rufnachricht 176 erzeugt, die auch als Alert-Nachricht bezeichnet wird und welche signalisiert, dass der Teilnehmer TlnB gerufen wird. Es sei angenommen, dass der Teilnehmer TlnB nicht an seinem Platz ist und somit den ankommenden Ruf nicht annehmen kann. Die Rufnachricht 176 wird über das Datenübertragungsnetz 20 zur Steuereinheit 64 übertragen und dort bearbeitet.

Beim Bearbeiten der Rufnachricht 176 erzeugt die Steuereinheit 64 zu einem Zeitpunkt t30 eine CSTA-Nachricht 178, die standardgemäß auch als DeliveredEvent-Nachricht bezeichnet wird und die folgenden Parameter enthält:
- connection D3C2,
- alertingDevice D1,
- callingDevice D4,
- calledDevice D1,
- localConnectionInfo "Connected",
- cause "new Call",
- associatedCalledDevice D3,
- callLinkageData G1, T1,
- privateData
   partnerLine D2C1,
wobei die Kennzeichen die bereit erläuterten Bedeutungen haben. Das Halbruf-Kennzeichen D2C1 bezeichnet einen Halbruf auf der Seite der Vermittlungsstelle 12. Die CSTA-Nachricht 178 wird über das Datenübertragungsnetz 20 zum Anwendungsprogramm 22 übertragen.

Das Anwendungsprogramm 22 erzeugt zu einem Zeitpunkt t32 aufgrund der CSTA-Nachrichten 162, 168, 172, 174 und 178 zu einem Zeitpunkt t32 eine CSTA-Nachricht 180, die standardgemäß auch als SetLampModeRequest bezeichnet wird und die folgenden Parameter enthält:
- device D4,
- lamp L4,
- lampMode "steady",
wobei L4 das Kennzeichen für die LED in der Funktionstaste 70 des Telefons 54 ist. Die CSTA-Nachricht 180 wird über das Datenübertragungsnetz zur Steuereinheit 64 übertragen und dort bearbeitet. Aufgrund der CSTA-Nachricht 180 wird erreicht, dass die LED in der Funktionstaste 70 eingeschaltet wird. Die Funktionstaste 70 ist, wie bereits erwähnt, dem gerufenen Telefon 46 zugeordnet und zeigt im Fall des rufenden Telefons 54 an, dass der Ruf erfolgreich zugestellt worden ist.

Zu einem Zeitpunkt t34 erzeugt das Anwendungsprogramm 22 eine CSTA-Nachricht 182, die standardgemäß auch als SetLampModeRequest-Nachricht bezeichnet wird und die folgenden Parameter enthält:
- device D6,
- lamp L7,
- lampMode "wink",
wobei L7 ein Kennzeichen der LED in der Funktionstaste 90 des Telefons 56 bezeichnet. Die CSTA-Nachricht 182 wird über das Datenübertragungsnetz 20 zur Steuereinheit 80 der Telekommunikationsanlage 16 übertragen und dort ausgewertet. Aufgrund der CSTA-Nachricht 182 wird die LED in der Funktionstaste 90 abwechselnd eingeschaltet und wieder ausgeschaltet, d.h. die LED blinkt. Aufgrund des Blinkens kann der Teilnehmer TlnC erkennen, dass das der Funktionstaste 90 zugeordnet Telefon 46 gerufen wird. Bei Aktivierung eines entsprechenden Leistungsmerkmals wird am Telefon 56 zusätzlich ein Signalton ausgegeben.

Die CSTA-Nachricht 180 bzw. die CSTA-Nachricht 182 wird wiederum von der Telekommunikationsanlage 14 bzw. von der Telekommunikationsanlage 16 mit Hilfe einer Bestätigungsnachricht bestätigt, die auch als SetLampModeResult-Nachricht bezeichnet wird. Die Bestätigungsnachrichten sind jedoch in Figur 2 nicht dargestellt.

Figur 3 zeigt ein Rufmodell 190, wie es im Anwendungsprogramm 22 zum Zeitpunkt t36 gilt. Wie aus Figur 3 zu erkennen ist, unterteilt sich das Rufmodell 190 in drei Teilmodelle MA, MB und MC, die in dieser Reihenfolge den Telekommunikationsanlagen 12, 14 und 16 zugeordnet sind.

Bezüglich des Teilmodells MA gilt, dass das Kennzeichen D1 und das Kennzeichen D2 durch das Rufkennzeichen C1 verbunden sind. Zur Seite des Kennzeichens D1 hat der durch das Rufkennzeichen C1 bezeichnete Ruf den Verbindungszustand "Rufen", siehe Kleinbuchstabe a (alerting). Zur Zeit des Kennzeichens D2 wird der Rufzustand des mit dem Rufkennzeichen C1 bezeichneten Rufes mit dem Kleinbuchstaben c (connect) gekennzeichnet. Im Teilmodell MA sind außerdem die Zustände der LED's in den Funktionstasten 48, 50 und 52 des Telefons 46 dargestellt, denen die Kennzeichen L1, L2 bzw. L3 zugeordnet worden sind. Ein Quadrat, dessen rechte Seite dunkel ist und dessen linke Seite hell ist, verdeutlicht den blinkenden Betriebszustand. Ein Quadrat, dessen linke Seite dunkel ist und dessen rechte Seite hell ist, verdeutlicht den flackernden Betriebszustand.

Im Teilmodell MB sind die Modellkennzeichen D3 und D4 durch ein Rufkennzeichen C2 verbunden. Zur Seite des Modellkennzeichens D3 hat der durch das Rufkennzeichen C2 bezeichnete Ruf den Rufzustand "Rufen", siehe Kleinbuchstabe a (alerting). Zur Seite des Modellkennzeichens D4 hat der durch das Rufkennzeichen C2 bezeichnete Ruf den Rufzustand "Verbunden", siehe Kleinbuchstabe c (connect). Außerdem sind im Teilmodell MB die Zustände der LED's 70, 72 und 74 vermerkt, denen die Kennzeichen L4, L5 bzw. L6 zugeordnet worden sind. Durch ein dunkel ausgefülltes Quadrat wird der Betriebszustand "Eingeschaltet" dargestellt. Für die LED's mit den Kennzeichen L4 und L5 ist der Betriebszustand "Eingeschaltet" vermerkt. Für das Kennzeichen L6 ist der Betriebszustand "Ausgeschaltet" vermerkt, siehe weißes Quadrat.

Die Rufkennzeichen C1 und C2 sind durch das globale Kennzeichen G1 verbunden, um so einen Ruf zu modellieren, der mehrere Telekommunikationsanlagen betrifft, nämlich die Telekommunikationsanlage 12 und die Telekommunikationsanlage 14. Das Thread-Kennzeichen T1 ist ebenfalls mit den Rufkennzeichen C1 und C2 verknüpft, um den Anwendungsprozess auf dem Rechner 18 zu kennzeichnen, mit dessen Hilfe die Modellierung ausgeführt wird.

In dem die Telekommunikationsanlage 16 betreffenden Teilmodell MC sind die Modellkennzeichen D5 und D6 vermerkt. Für das Modellkennzeichen D6 sind außerdem die Zustände der LED's in den Funktionstasten 90, 92 bzw. 94 vermerkt, denen in dieser Reihenfolge die Kennzeichen L7, L8 und L9 zugeordnet worden sind. Für das Kennzeichen L7 ist der Zustand "Blinkend" vermerkt. Für das Kennzeichen L8 ist der Betriebszustand "Eingeschaltet" vermerkt, siehe ausgefülltes Quadrat. Für die LED's in der Funktionstaste 94, d.h. für das Kennzeichen L9 ist der Betriebszustand "Ausgeschaltet" vermerkt, siehe weißes Quadrat.

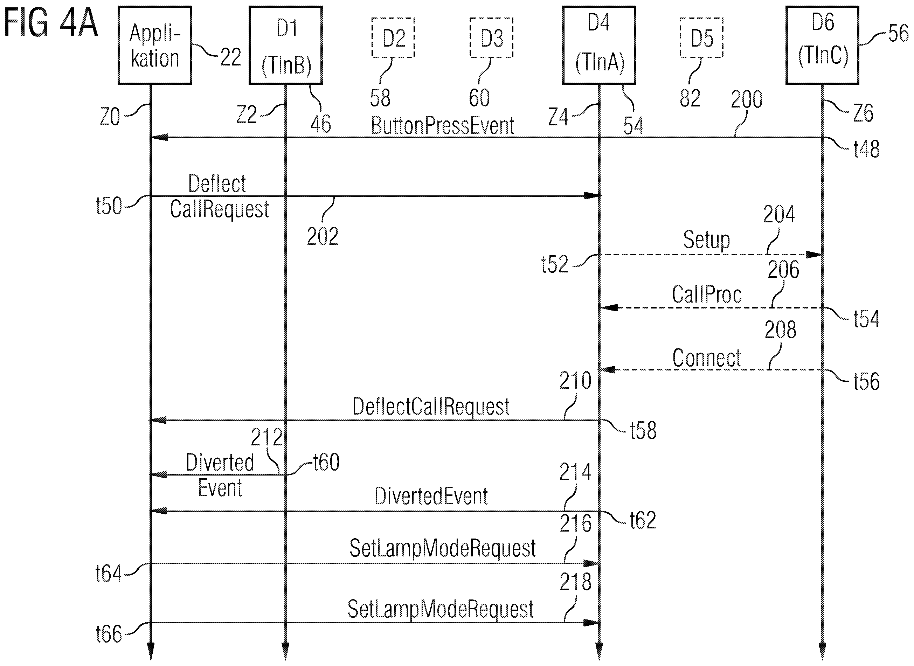

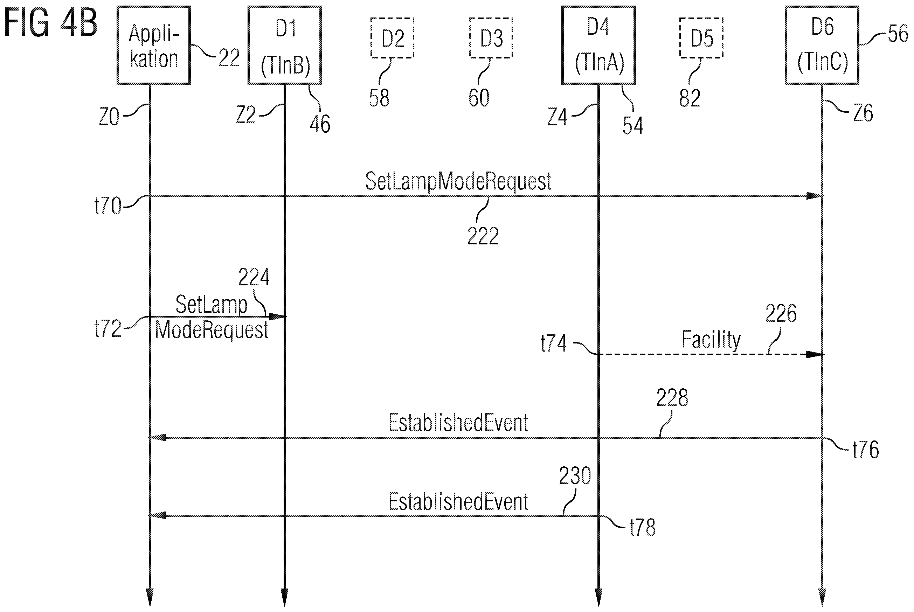

Die Figuren 4A und 4B zeigen Nachrichten, die innerhalb des Telekommunikationsanlagenverbundes 10 erzeugt werden, wenn der Teilnehmer TlnC den vom Teilnehmer TlnA an den Teilnehmer TlnB gerichteten Ruf übernimmt. Es sei angenommen, dass sich der Teilnehmer TlnC entschließt, den am Telefon 46 ankommenden Ruf durch Drücken der Funktionstaste 90 an seinem Telefon 56 zu übernehmen. Aufgrund des Drückens der Funktionstaste 90 wird durch die Steuereinheit 80 der Telekommunikationsanlage 16 zu einem Zeitpunkt t48 eine CSTA-Nachricht 200 erzeugt, die standardgemäß auch als ButtonPressEvent-Nachricht bezeichnet wird und die folgenden Parameter enthält:
- device D6,
- button B2,
- privateData 0
wobei B2 ein Kennzeichen bezeichnet, das der Funktionstaste 90 zugeordnet worden ist. Die CSTA-Nachricht 200 wird über das Datenübertragungsnetz 20 zum Anwendungsprogramm 22 übertragen und dort ausgewertet.

Das Anwendungsprogramm 22 ermittelt aufgrund der CSTA-Nachricht 200 unter Einbeziehung der Datenbasis 30, dass die Funktionstaste mit dem Kennzeichen B2 dem Telefon 46 zugeordnet ist. Aufgrund des Rufmodells 190 stellt das Anwendungsprogramm 22 fest, dass der Halbruf D3C2 umgeleitet werden muss, vgl. Datenfeld "partnerLine" in der CSTA-Nachricht 174. Das Anwendungsprogramm 22 erzeugt zu einem Zeitpunkt t50 eine CSTA-Nachricht 202, die standardgemäß auch als DeflectCallRequest-Nachricht bezeichnet wird und die folgenden Parameter enthält:
- callToBeDiverted D3C2,
- newDestination D6,
wobei die Kennzeichen die oben bereits erläuterte Bedeutung haben. Die CSTA-Nachricht 202 wird über das Datenübertragungsnetz 20 zur Steuereinheit 64 der Vermittlungsstelle 14 übertragen, weil für das rufende Telefon 54 (callingDevice) D4 durch das TSP-Programm 26 die Adresse LB vermerkt worden ist.

Die CSTA-Nachricht 202 wird durch die Steuereinheit 64 mit Hilfe einer nicht dargestellten Bestätigungsnachricht bestätigt, die standardgemäß auch als DeflectCallResult-Nachricht bezeichnet wird.

Aufgrund der CSTA-Nachricht 202 veranlasst die Steuereinheit 64 zu einem Zeitpunkt t52 das Erzeugen einer Verbindungsaufbaunachricht 204, die auch als Setup-Nachricht bezeichnet wird. Die Verbindungsaufbaunachricht 204 wird über das Datenübertragungsnetz 20 von der Telekommunikationsanlage 14 zur Telekommunikationsanlage 16 getunnelt.

Beim Bearbeiten der Verbindungsaufbaunachricht 204 erzeugt die Steuereinheit 80 der Telekommunikationsanlage 16 zu einem Zeitpunkt t54 eine Fortsetzungsnachricht 206, die auch als CallProc-Nachricht bezeichnet wird. Die Fortsetzungsnachricht 206 signalisiert, dass alle erforderlichen Wahlziffern an die Telekommunikationsanlage 16 übermittelt worden sind. Die Fortsetzungsnachricht 206 wird über das Datenübertragungsnetz 20 zur Telekommunikationsanlage 14 getunnelt und dort durch die Steuereinheit 64 bearbeitet.

Die Steuereinheit 80 der Telekommunikationsanlage 16 erzeugt aufgrund der Verbindungsaufbaunachricht 204 nach dem Herstellen einer Verbindung zwischen dem Telefon 54 und dem Telefon 56 außerdem zu einem Zeitpunkt t56 eine Verbindungsnachricht 208, die auch als Connect-Nachricht bezeichnet wird. Die Verbindungsnachricht 208 wird über das Datenübertragungsnetz 20 von der Telekommunikationsanlage 16 zur Telekommunikationsanlage 14 getunnelt.

Die Steuereinheit 64 der Telekommunikationsanlage 14 erzeugt beim Bearbeiten der Verbindungsnachricht 208 zu einem Zeitpunkt t58 eine CSTA-Nachricht 210, die standardgemäß auch als DeflectCallResult-Nachricht bezeichnet wird. Die CSTA-Nachricht 210 wird über das Datenübertragungsnetz 20 zum Anwendungsprogramm 22 übertragen.

Zu einem Zeitpunkt t60 erzeugt die Steuereinheit 44 der Telekommunikationsanlage 12 aufgrund einer Verbindungsabbaunachricht, die auch als Disconnect-Nachricht bezeichnet wird, eine CSTA-Nachricht 212. Die Verbindungsabbaunachricht kommt von der Vermittlungsstelle 14, ist jedoch in Figur 4A nicht dargestellt. Die CSTA-Nachricht 212 wird standardgemäß auch als DivertedEvent-Nachricht bezeichnet und enthält die folgenden Parameter:
- divertingConnection D1C1,
- divertingDevice D1,
- newDestination D6,
- lastRedirectionDevice NR,
- localConnectionInfo Null,
- cause "redirected",
- callLinkageData G1, T1
wobei die Kennzeichen die oben erwähnten Bedeutungen haben. Das Kennzeichen NR bezeichnet einen Parameter, der nicht benötigt wird und deshalb auch nicht angegeben ist. Die CSTA-Nachricht 212 wird über das Datenübertragungsnetz 20 zum Anwendungsprogramm 22 übertragen und dort zur Aktualisierung des Rufmodells 190 eingesetzt.

Aufgrund der Verbindungsnachricht 208 erzeugt die Steuereinheit 64 der Telekommunikationsanlage 14 zu einem Zeitpunkt t62 ebenfalls eine CSTA-Nachricht 214, die standardgemäß auch als DivertedEvent-Nachricht bezeichnet wird und die folgenden Parameter enthält:
- divertingConnection D3C2,
- divertingDevice D1,
- newDestination D6,
- lastRedirectionDevice NR,
- localConnectionInfo "Connected",
- cause "redirected",
- associatedCalledDevice D8,
- causeLinkageData G1, T1
wobei die Kennzeichen die oben erläuterte Bedeutung haben. Die CSTA-Nachricht 214 wird über das Datenübertragungsnetz 20 zum Anwendungsprogramm 22 übertragen und dort zur Aktualisierung des Rufmodells 190 eingesetzt.

Zu einem Zeitpunkt t64 erzeugt das Anwendungsprogramm 22 eine CSTA-Nachricht 216, die standardgemäß auch als SetLampModeRequest-Nachricht bezeichnet wird und die folgenden Parameter enthält:
- device D4,
- lamp L4,
- lampMode "off",
wobei insbesondere das Kennzeichen L4 der LED in der Funktionstaste 70 des Telefons 54 zugeordnet ist. Die CSTA-Nachricht 216 wird über das Datenübertragungsnetz 20 zur Vermittlungsstelle 14 übertragen und dort bearbeitet. Aufgrund der CSTA-Nachricht 216 wird diejenige LED am Telefon 54 ausgeschaltet, welche dem Telefon 46 zugeordnet ist.

Zu einem Zeitpunkt t66 erzeugt das Anwendungsprogramm 22 eine CSTA-Nachricht 218, die standardgemäß auch als SetLampModeRequest-Nachricht bezeichnet wird und die folgenden Parameter enthält:
- device D4,
- lamp L6,
- lampMode "steady",
um die LED der Funktionstaste 74 einzuschalten und somit dem Teilnehmer TlnA zu signalisieren, dass der Teilnehmer TlnC den Hörer seines Telefons 56 abgenommen hat, um den Ruf zu übernehmen. Die CSTA-Nachricht 218 wird über das Datenübertragungsnetz 20 zur Telekommunikationsanlage 14 übertragen und dort bearbeitet.

Zu einem Zeitpunkt t70 erzeugt das Anwendungsprogramm 22 eine CSTA-Nachricht 222, die standardgemäß auch als SetLampModeRequest-Nachricht bezeichnet wird und die folgenden Parameter enthält:
- device D6,
- lamp L1,
- lampMode "off",
um die dem Telefon 46 zugeordnete LED in der Funktionstaste 90 auszuschalten. Die CSTA-Nachricht 222 wird über das Datenübertragungsnetz vom Rechner 18 zur Telekommunikationsanlage 16 übertragen.

Zu einem Zeitpunkt t72 erzeugt das Anwendungsprogramm 22 eine CSTA-Nachricht 224, die standardgemäß auch als SetLampModeRequest-Nachricht bezeichnet wird und die folgenden Parameter enthält:
- device D1,
- lamp L3,
- lampMode "steady",
um am Telefon 46 die dem Telefon 56 zugeordnete LED in der Funktionstaste 52 einzuschalten. Die CSTA-Nachricht 224 wird über das Datenübertragungsnetz 20 zur Vermittlungsstelle 12 übertragen und dort durch die Steuereinheit 44 bearbeitet.

Die CSTA-Nachrichten 216, 218, 222 und 224 werden durch nicht dargestellte Bestätigungsnachrichten bestätigt, die standardgemäß auch als SetLampModeResult-Nachrichten bezeichnet werden.

Aufgrund der Verbindungsnachricht 208 erzeugt die Telekommunikationsanlage 14 zu einem Zeitpunkt t74 eine Leistungsmerkmalnachricht 226, die auch als Facility-Nachricht bezeichnet wird. Die Leistungsmerkmalnachricht enthält ein Informationselement FIE (Feature Information Element) mit einem Kennzeichen callRerouting.rr, wobei rr eine Rückmeldung (Returnresult) kennzeichnet. Die Leistungsmerkmalnachricht 226 wird über das Datenübertragungsnetz 20 zur Telekommunikationsanlage 16 getunnelt und dort bearbeitet.

Die Steuereinheit 80 der Telekommunikationsanlage 16 erzeugt aufgrund der Leistungsmerkmalsnachricht 226 zu einem Zeitpunkt t76 eine CSTA-Nachricht 228, die standardgemäß auch als EstablishedEvent-Nachricht bezeichnet wird und die folgenden Parameter enthält:
- establishedConnection D5C4,
- answeringDevice D6,
- callingDevice D4,
- calledDevice D1,
- localConnectionInfo "Connected",
- cause "newCalled",
- associatedCalledDevice D5,
- callLinkageData G1, T1,
wobei die Kennzeichen die oben erwähnte Bedeutung haben. Die CSTA-Nachricht 228 wird über das Datenübertragungsnetz 20 von der Telekommunikationsanlage 16 zum Anwendungsprogramm 22 übertragen.

Die Steuereinheit 64 der Telekommunikationsanlage 14 erzeugt zu einem Zeitpunkt t78 ebenfalls eine CSTA-Nachricht 230, die standardgemäß als EstablishedEvent-Nachricht bezeichnet wird und die folgenden Parameter enthält:
- establishedConnection D8C2,
- answeringDevice D6,
- callingDevice D4,
- calledDevice D1,
- originatingNIDConnection D3C2,
- localConnectionInfo "Connected",
- cause "new Call",
- associatedCallingDevice D8,
- callLinkageData G1, T1,
wobei die Kennzeichen wiederum die oben erläuterten Bedeutungen haben. Die CSTA-Nachricht 230 wird über das Datenübertragungsnetz 20 von der Vermittlungsstelle 14 zum Anwendungsprogramm 22 übertragen und dient dort zur Aktualisierung des Rufmodells 190.

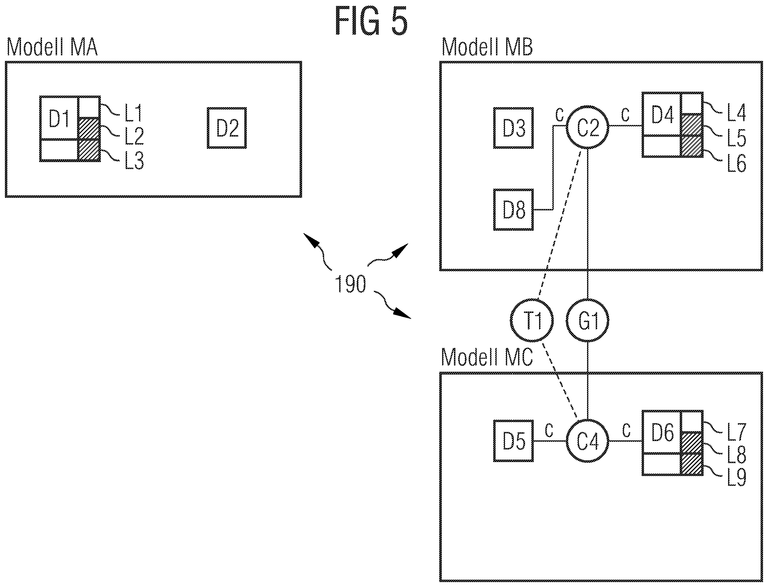

Figur 5 zeigt das Rufmodell 190 des Anwendungsprogramms 22 nach dem Zeitpunkt t78. Die Modellkennzeichen D1 und D2 sind nicht mehr durch das Rufkennzeichen C1 verknüpft. Jedoch sind für die Kennzeichen L1, L2 und L3 in dieser Reihenfolge die Betriebszustände "Ausgeschaltet", "Eingeschaltet" bzw. "Eingeschaltet" vermerkt.

Im Teilmodell MB verknüpft das Rufkennzeichen C2 nun die Modellkennzeichen D4 und D8. Beide Teilrufe des durch das Rufkennzeichen C2 bezeichneten Rufe haben den Verbindungszustand "Verbunden", siehe Kleinbuchstabe c (connect). Für die Kennzeichen L4, L5 und L6 sind in dieser Reihenfolge die Betriebszustände "Ausgeschaltet", "Eingeschaltet" bzw. "Eingeschaltet" vermerkt.

Im Teilmodell MC verknüpft ein Rufkennzeichen C4 die Modellkennzeichen D5 und D6. Die Halbrufe des durch das Rufkennzeichen C4 bezeichneten Rufes befinden sich bei im Verbindungszustand "Verbunden", siehe Kleinbuchstaben c (connect). Für die Kennzeichen L7, L8 und L9 sind in dieser Reihenfolge die Betriebszustände "Ausgeschaltet", "Eingeschaltet" bzw. "Eingeschaltet" vermerkt. Das globale Kennzeichen G1 verknüpft nun die Rufkennzeichen C2 und C4 bzw. die durch diese Rufkennzeichen C2 und C4 bezeichneten Rufe. Das Thread-Kennzeichen T1 verknüpft ebenfalls die Rufkennzeichen C2 und C4.

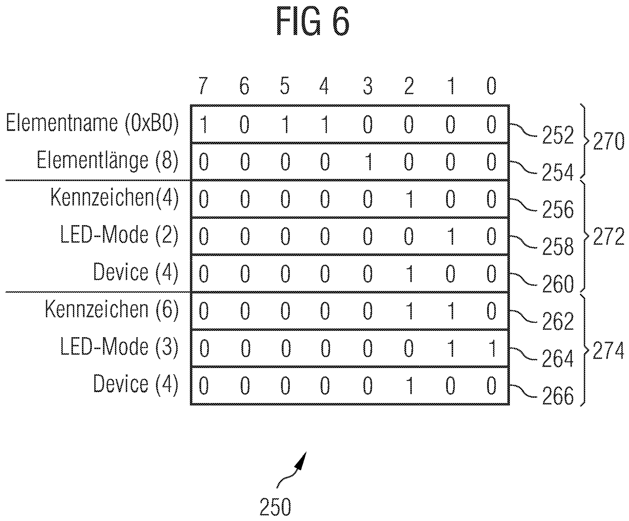

Figur 6 zeigt ein Informationselement 250, das gemäß einem zweiten Ausführungsbeispiel an Stelle der CSTA-Nachrichten 216 und 218 übertragen wird. Das Informationselement 250 enthält acht Datenfelder 252 bis 266, die jeweils eine Länge von acht Bits 0 bis 7 haben. Das Datenfeld 252 dient zur Übertragung eines Kennzeichens für das Informationselement 250, z.B. zur Übertragung eines Elementnamens. Im Ausführungsbeispiel wird das Element durch die Nummer 0xB0 bezeichnet, wobei 0x auf eine hexadezimale Schreibweise hinweist. Im Datenfeld 254 wird die Elementlänge angegeben, da ein Informationselement 250 beispielsweise bis zu 20 Elementeinträge haben kann.

Bei dem in Figur 6 gezeigten Ausführungsbeispiel enthält das Informationselement 250 neben einem durch die Datenfelder 252 und 254 gebildeten Elementkopf 270 zwei Elementeinträge 272 und 274. Die Datenfelder eines Elementeintrages haben immer die gleiche Bedeutung jedoch gegebenenfalls voneinander abweichende Inhalte.

Der Elementeintrag 272 ersetzt die CSTA-Nachricht 216. Ein erstes Datenfeld 256 des Elementeintrages 272 hat den Wert Vier, um auf das Kennzeichen L4 hinzuweisen. Ein zweites Datenfeld 258 kennzeichnet den LED-Betriebszustand und hat im Ausführungsbeispiel den Wert Zwei, um auf den Betriebszustand "Ausgeschaltet" hinzuweisen. Ein drittes Datenfeld 260 des Elementeintrages 272 gibt das Gerät an und hat im Ausführungsbeispiel den Wert Vier, um auf das Kennzeichen D4 hinzuweisen.

Im Elementeintrag 274 haben die Datenfelder 262, 264 und 266 in dieser Reihenfolge:
- den Wert Sechs, um auf das Kennzeichen L6 hinzuweisen,
- den Wert Drei, um den Betriebszustand "Eingeschaltet" zu kennzeichnen, und
- den Wert Vier, um das Kennzeichen D4 zu bezeichnen.

Das Informationselement 250 ist also eine Erweiterung des CSTA-Standards. Selbstverständlich können andere Werte zur Bezeichnung des Informationselementes 250 oder zur Bezeichnung der verschiedenen Betriebszustände genutzt werden. Auch die Reihenfolge der Datenfelder 252 bis 266 lässt sich variieren.

Die TAPI-Schnittstelle 24 lässt sich über einen sogenannten "Extended Service" so erweitern, dass das Informationselement 250 bearbeitet werden kann. Ein Beispiel für eine solche Erweiterung lautet:

```
 const WORD cwSetLEDBroadcast = 0x0045;
 typedef struct
 {
     BYTE     byButton
     BYTE     byLampMode
     DEVICE   Device;
 } LedBroadcastElement;
 struct SetLEDBroadcast_Struct : public Simple_Struct
 {
     BB_Struct_Initialize(SetLEDBroadcast)
     LedBroadcastElement[20];
 };
     byLampMode
     PHONELAMPMODE_FLUTTER
     PHONELAMPMODE_OFF
     PHONELAMPMODE_STEADY
     PHONELAMPMODE_WINK
```

Bei einem anderen Ausführungsbeispiel werden an einem Endgerät keine Signalisierungszustände zu diesem Endgerät selbst angezeigt. Ein Belegen einer Kurzwahltaste mit der Rufnummer des Endgerätes, an dem sich die Taste befindet ist nicht möglich.

## Patentansprüche

1. Verfahren zum Ansteuern eines Anzeigeelementes (L7) an einem ersten Endgerät (56), bei dem das erste Endgerät (56) an einer ersten vermittlungstechnischen Einrichtung (16) betrieben wird, welche Funktionen einer Telekommunikationsanlage erbringt, bei dem das erste Endgerät (56) mindestens ein Anzeigeelement (L7) trägt, das Rufzustände eines dem Anzeigeelement (L7) zugeordneten zweiten Endgerätes (46) anzeigt, bei dem das Anzeigeelement (L7) mit Hilfe von Signalisierungsnachrichten von der ersten vermittlungstechnischen Einrichtung (16) abhängig von den Rufzuständen des dem Anzeigeelement (L7) zugeordneten zweiten Endgerätes (46) angesteuert wird, und bei dem das dem Anzeigeelement (L7) zugeordnete zweite Endgerät (46) an einer zweiten, Funktionen einer Telekommunikationsanlage erbringenden, vermittlungstechnischen Einrichtung (12) betrieben wird, **dadurch gekennzeichnet, dass** wenn das dem Anzeigeelement (L7) zugeordnete zweite Endgerät (46) von einem dritten Endgerät (54), welches an einer dritten, Funktionen einer Telekommunikationsanlage erbringenden vermittlungstechnischen Einrichtung (14) betrieben wird, aus gerufen wird, von einem Anwendungsprogramm (22) einer zentralen Steuereinheit (18) eine Rufzustandsnachricht erzeugt wird, wobei die vermittlungstechnischen Anlagen (12, 14, 16) über ein Datenpaketübertragungsnetz (20) verbunden sind, wobei einerseits Sprachdaten und andererseits für eine durchschaltevermittelte Datenübertragung dienende Signalisierungsdaten zwischen den vermittlungstechnischen Einrichtungen (12, 14, 16) über das Datenpaketübertragungsnetz (20) getunnelt werden, wobei die zentrale Steuereinheit (18) CSTA-Verbindungen über das Datenpaketübertragungsnetz zu den vermittlungstechnischen Anlagen (12, 14, 16) aufbaut,
wobei die Rufzustandsnachricht (158) gemäß dem CSTA-Protokoll oder einem auf dem CSTA-Protokoll aufbauenden Protokoll über das Datenpaketübertragungsnetz (20) gesendet wird und somit den Rufzustand des dem Anzeigeelement (L7) zugeordneten zweiten Endgerätes (46) signalisiert, wobei die erste vermittlungstechnische Einrichtung (16) zum Betreiben des ersten Endgerätes (56) mit dem Anzeigeelement (L7) abhängig von der Rufzustandsnachricht (158) das Anzeigeelement (L7) ansteuert, wobei die Rufzustandsnachricht (158) erzeugt wird nach Auswertung einer Antwortnachricht (154) von der dritten vermittlungstechnischen Einrichtung (14), auf eine den Ruf anfordernde Nachricht (152) von der zentralen Steuereinheit (18).

2. Verfahren nach Anspruch 1, **dadurch gekennzeichnet, dass** in enger räumlicher Beziehung zu dem Anzeigeelement (L7) ein Funktionselement (90) angeordnet ist, bei dessen Betätigung das dem Anzeigeelement (L7) zugeordnete Endgerät (46) erreichbar ist,
und dass beim Betätigen der Funktionstaste (90) in Zusammenhang mit der Anzeige dieses Betriebszustandes Verfahrensschritte (202 bis 214) zum Heranholen des Rufes ausgeführt werden.

3. Verfahren nach Anspruch 2, **dadurch gekennzeichnet, dass** die Verfahrensschritte (202 bis 214) zum Heranholen des Rufes eine Rufumleitung (202) des ankommenden Rufes zu dem Endgerät (54) zu dem Endgerät (56) mit dem Anzeigeelement (L7) enthalten.

4. Verfahren nach Anspruch 1, **dadurch gekennzeichnet, dass** die Betriebszustandsnachricht (158) den Betriebszustand des dem Anzeigeelement (L7) zugeordneten Endgerätes (46) direkt oder indirekt über die Angabe eines Betriebszustandes für das Anzeigeelement (L7) signalisiert.

5. Verfahren nach einem der vorhergehenden Ansprüche, **dadurch gekennzeichnet, dass** die Betriebszustandsnachricht (158) eine Nachricht gemäß CSTA-Protokoll oder gemäß einem auf dem CSTA-Protokoll aufbauendem Protokoll ist.

6. Verfahren nach einem der Ansprüche 1 bis 4, **dadurch gekennzeichnet, dass** die Betriebszustandsnachricht (250) mehrere Betriebszustände (272, 274) für verschiedene Endgeräte (46, 54) signalisiert.

7. Verfahren nach einem der vorhergehenden Ansprüche, **dadurch gekennzeichnet, dass** der zentralen Steuereinheit (18) das Betätigen einer Funktionstaste (72, 90) an einem Endgerät (54, 56) signalisiert wird.

8. Verfahren nach einem der vorhergehenden Ansprüche, **dadurch gekennzeichnet, dass** die Betriebszustandsnachricht (158) mit Hilfe eines Rufmodells (190) erzeugt wird.

9. Vermittlungstechnische Einrichtung (16) **dadurch gekennzeichnet, dass** die vermittlungstechnische Einrichtung (16) so aufgebaut ist, dass bei ihrem Betrieb ein Verfahren nach einem der Ansprüche 1 bis 8 ausgeführt wird.

10. Anlagenverbund (10), **gekennzeichnet durch** mindestens zwei vermittlungstechnische Einrichtungen (12, 16) nach Anspruch 9.

11. Programm (80) mit einer Befehlsfolge, bei deren Ausführung durch einen Prozessor ein Verfahren nach einem der Ansprüche 1 bis 8 ausgeführt wird.

## Claims

1. Method for control of a display element (L7) on a first terminal (56), in which the first terminal (56) is operated on a first switching facility (16), which performs the functions of a telecommunication system, in which the first terminal (56) carries at least one display element (L7), that displays the call state of a second terminal (46) that is assigned to the display element (L7), where the display element (L7) is operated with the assistance of signaling messages from the first switching facility (16) dependent on the call state of the second terminal (46) that is assigned to the display element (L7), and whereby the second terminal (46) assigned to the display element (L7) is operated on a second switching facility (12) that performs functions of a telecommunication system, **characterized by** the fact that when the second terminal (46) that is assigned to the display element (L7) is called from a third terminal (54) which is operated on a third switching facility (14) performing the functions of a telecommunication system, a call state message is created by an application program (22) of a central control unit (18), whereby the switching facilities (12, 14, 16) are coupled by means of a data packet transmission network (20), whereby on the one hand, speech data, and, on the other hand, signaling data, serving as an interconnected switching data transmission, are tunneled over the data packet transmission network (20) between the switching facilities (12, 14, 16), whereby the central control unit (18) builds CSTA-connections over the data packet transmission network to the switching facilities (12, 14, 16), whereby the call state message (158) is sent over the data packet transmission network (20) according to the CSTA protocol or according to a protocol structured on the CSTA protocol and, as a consequence, the call state of the second terminal (46) assigned to the display element (L7) is signaled, whereby for the operation of the first terminal (56) with the display element (L7), the first switching facility (16) controls the display element (L7) dependent on the call state message (158), whereby the call state message (158) is produced, following analysis of an answer message (154) of the third switching facility (14), to the call requesting message (152) from the central control unit (18) .

2. Method according to Claim 1, **characterized by the fact** that a functional element (90) is arranged in close physical proximity to the display element (L7), upon the actuation of which the terminal (46) which is assigned to the display element (L7) is reachable, and that upon actuation of the function key (90) in conjunction with the display of this operational state, the method steps (202 through 214) for the fetching of the call are carried out.

3. Method according to Claim 2, **characterized by the fact** that the method steps (202 through 214) for the fetching of the call contain a call diversion (202) of the call that is incoming to the terminal (54), to the terminal (56) with the display element (L7).

4. Method according to Claim 1, **characterized by the fact** that the operational state message (158) of the terminal (46) assigned to the display element (L7) directly or indirectly signals via the indication of an operational state for the display element (L7).

5. Method according to one of the preceding Claims, **characterized by the fact** that operational state message (158) is a message according to CSTA protocol or according to a protocol structured on a CSTA protocol.

6. Method according to one of the Claims 1 through 4, **characterized by the fact** that the operational state message (250) signals a multitude of operational states (272, 274) for a variety of terminals (46, 54).

7. Method according to one of the preceding Claims, **characterized by the fact** that the central control unit (18) is signaled the actuation of a function button (72, 90) on a terminal (54, 65).

8. Method according to one of the preceding Claims, **characterized by the fact** that the operational state message (158) is created with the assistance of a call model (190) .

9. Switching facility (16) is **characterized by the fact** that the switching facility (16) is built up in such a way that, upon its operation, a method according one of the Claims 1 through 8 is carried out.

10. An integrated facility (10) **characterized by** at least two switching facilities (12, 16) according to Claim 9.

11. Program (80) with a command sequence, upon the execution of which, by a processor, a method according to one of the Claims 1 through 8 is carried out.

## Revendications

1. Procédé de commande d'un élément d'affichage (L7) au niveau d'un premier terminal (56), selon lequel le premier terminal (56) est en fonctionnement au niveau d'un premier système technique de commutation (16) qui réalise des fonctions d'une installation de télécommunication, selon lequel le premier terminal (56) porte au moins un élément d'affichage (L7) qui affiche des états d'appel d'un deuxième terminal (46) associé à l'élément d'affichage (L7), selon lequel l'élément d'affichage (L7) est commandé à l'aide de messages de signalisation du premier système technique de commutation (16) en fonction des états d'appel du deuxième terminal (46) associé à l'élément d'affichage (L7), et selon lequel le deuxième terminal (46) associé à l'élément d'affichage (L7) est en fonctionnement au niveau d'un deuxième système technique de commutation (12) réalisant des fonctions d'une installation de télécommunication, **caractérisé en ce que**, lorsque le deuxième terminal (46) associé à l'élément d'affichage (L7) est appelé par un troisième terminal (54), qui est en fonctionnement au niveau d'un troisième système technique de commutation (14) réalisant des fonctions d'une installation de télécommunication, un message d'état d'appel est généré par un programme d'application (22) d'une unité de commande centrale (18), dans lequel les installations techniques de commutation (12, 14, 16) sont reliées par le biais d'un réseau de transmission de paquets de données (20), dans lequel, d'une part, des données vocales et, d'autre part, des données de signalisation servant à une transmission de données par intercommunication entre les systèmes techniques de commutation (12, 14, 16) sont transmises par tunnellisation par le biais du réseau de transmission de paquets de données (20), dans lequel l'unité centrale de commande (18) établit des liaisons CSTA par le biais du réseau de transmission de paquets de données aux installations techniques de commutation (12, 14, 16), dans lequel le message d'état d'appel (158) est envoyé selon le protocole CSTA ou un protocole s'établissant sur le protocole CSTA par le biais du réseau de transmission de paquets de données (20) et signalise ainsi l'état d'appel du deuxième terminal (46) associé à l'élément d'affichage (L7), dans lequel le premier système technique de commutation (16) pour le fonctionnement du premier terminal (56) avec l'élément d'affichage (L7) commande l'élément d'affichage (L7) en fonction du message d'état d'appel (158), dans lequel le message d'état d'appel (158) est généré après une évaluation d'un message de réponse (154) par le troisième système technique de commutation (14) à un message (152) de l'unité centrale de commande (18) demandant l'appel.

2. Procédé selon la revendication 1, **caractérisé en ce qu'**un élément de fonction (90), par l'actionnement duquel le terminal (46) associé à l'élément d'affichage (L7) peut être atteint, est disposé en relation spatiale étroite avec l'élément d'affichage (L7),
et **en ce que**, lors de l'actionnement de la touche de fonction (90) en rapport avec l'affichage de cet état de fonctionnement, des étapes de procédé (202 à 214) sont appelées pour aller chercher l'appel.

3. Procédé selon la revendication 2, **caractérisé en ce que** les étapes de procédé (202 à 214) pour aller chercher l'appel contiennent un renvoi d'appel (202) de l'appel arrivant du terminal (54) au terminal (56) avec l'élément d'affichage (L7).

4. Procédé selon la revendication 1, **caractérisé en ce que** le message d'état de fonctionnement (158) signalise l'état de fonctionnement du terminal (46) associé à l'élément d'affichage (L7) directement ou indirectement par le biais de l'indication d'un état de fonctionnement pour l'élément d'affichage (L7).

5. Procédé selon l'une quelconque des revendications,
**caractérisé en ce que** le message d'état de fonctionnement (158) est un message selon le protocole CSTA ou un protocole s'établissant sur le protocole CSTA.

6. Procédé selon l'une quelconque des revendications 1 à 4,
**caractérisé en ce que** le message d'état de fonctionnement (250) signalise plusieurs états de fonctionnement (272, 274) pour différents terminaux (46, 54).

7. Procédé selon l'une quelconque des revendications,
**caractérisé en ce que** l'unité centrale de commande (18) signalise l'actionnement d'une touche de fonction (72, 90) au niveau d'un terminal (54, 56).

8. Procédé selon l'une quelconque des revendications,
**caractérisé en ce que** le message d'état de fonctionnement (158) est généré à l'aide d'un modèle d'appel (190).

9. Système technique de commutation (16)
**caractérisé en ce que** le système technique de commutation (16) est conçu de sorte que, lors de son fonctionnement, un procédé selon l'une quelconque des revendications 1 à 8 est exécuté.

10. Réseau de commutateurs de télécommunication (10),
**caractérisé par** au moins deux systèmes techniques de commutation (12, 16) selon la revendication 9.

11. Programme (80) avec une séquence d'instructions lors de l'exécution de laquelle par un processeur un procédé selon l'une quelconque des revendications 1 à 8 est exécuté.
